# EUROPEAN PATENT SPECIFICATION

(11) **EP 3 306 853 B1**
(45) Date of publication and mention of the grant of the patent: **03.04.2019**
(21) Application number: 17194065.3
(22) Date of filing: 29.09.2017
(51) Int. Cl.: H04L 9/08

(54) **COMMUNICATION DEVICE AND COMMUNICATION SYSTEM**
KOMMUNIKATIONSVORRICHTUNG UND KOMMUNIKATIONSSYSTEM
SYSTÈME DE COMMUNICATION ET DISPOSITIF DE COMMUNICATION

(30) Priority: 04.10.2016 JP 2016196568
(43) Date of publication of application: 11.04.2018
(73) Proprietor: Panasonic Intellectual Property Management Co., Ltd., Osaka-shi, Osaka 540-6207 (JP)
(72) Inventor: Hara, Yuta, Osaka 540-6207 (JP); Sasaki, Takayuki, Osaka 540-6207 (JP); Goto, Hiroaki, Osaka 540-6207 (JP)
(74) Representative: Appelt, Christian W.

(56) References cited:
- US-A1- 2005 094 814
- US-A1- 2010 091 993
- US-A1- 2011 188 654

## Description

### Technical Field

The present invention relates to a communication device and a communication system.

### Background Art

A communication system in which a common key is used to encrypt a communication frame has been known (see for example, JP 2011-160210 A, hereinafter referred to as "Document 1").

The communication system described in Document 1 includes a plurality of communication terminals (communication devices). When transmitting a communication frame including data, each communication terminal transmits the communication frame including identification information of a master network key (encryption key) used for encryption and decryption of data. The communication system described in Document 1 periodically performs a key update.

However, the communication terminal described in Document 1 transmits the communication frame including the identification information of the master network key and thus has a problem of an increased amount of transmission per communication.

Omission of the identification information of the encryption key for a reduction in the amount of transmission leads to a problem of a delay in noticing that the key update failed. US 2010/0091993 discloses a wireless communication device and encryption key updating method.

### Summary of Invention

In view of the foregoing, it is an objective of the present invention is to provide a communication device and a communication system which enable early and reliable detection of a failure in a key update.

A communication device according to one aspect of the present invention includes a storage, a receiver, a decryptor, and a key updater. The storage is configured to store an encryption key group including at least one encryption key. The receiver is configured to receive encrypted data from a transmission source node. The decryptor is configured to perform decryption of the encrypted data received by the receiver by using one encryption key in the encryption key group stored in the storage. The key updater is configured to acquire a new key at a prescribed timing to update the encryption key group in the storage. The key updater performs reacquisition operation for acquiring the new key to update the encryption key group in the storage regardless of the prescribed timing when the decryptor fails the decryption and a prescribed condition attributed to the transmission source node is not satisfied. The key updater does not perform the reacquisition operation when the decryptor fails the decryption and the prescribed condition is satisfied.

A communication system according to one aspect of the present invention includes a plurality of the communication devices.

### Brief Description of Drawings

FIG. 1 is a schematic view illustrating a communication device and a communication system according to a basic aspect;
FIG. 2 is a schematic view illustrating operation between two communication devices both of which have succeeded in a key update of the basic aspect;
FIG. 3 is a schematic view illustrating operation between two communication devices one of which has failed the key update of the basic aspect; and
FIG. 4 is a time chart illustrating operation of a communication device according to a first embodiment when a power failure ends.

### Description of Embodiments

First to fourth embodiments relate to a communication device and a communication system, and specifically to a communication device configured to decrypt encrypted data encrypted by using an encryption key and a communication system including a plurality of the communication devices.

The communication device according to the first to fourth embodiments below basically performs reacquisition operation for acquiring a new key regardless of a prescribed timing when the communication device fails decryption. However, the communication device does not perform the reacquisition operation when the communication device fails the decryption and a prescribed condition attributed to a transmission source node is satisfied.

With reference to the drawings, the communication device and the communication system according to a basic aspect and the first to fourth embodiments will be described in detail below.

### Basic Aspect

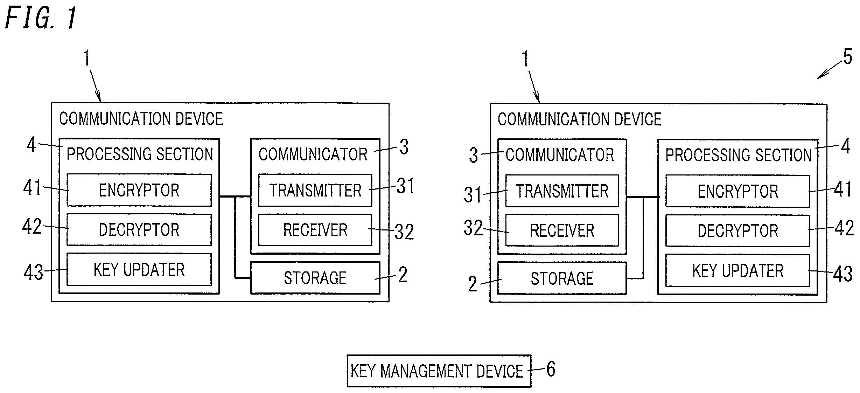

As illustrated in FIG. 1, a communication system 5 according to the basic aspect includes a plurality of (in FIG. 1, two) communication devices 1 and a key management device 6. The communication system 5 transmits encrypted data between the two communication devices 1. The encrypted data is encrypted by using an encryption key which is a common key to the two communication devices 1. The key management device 6 manages the encryption key.

Each of the plurality of communication devices 1 is included in, for example, a smart meter installed in a consumer facility or a concentrator configured to acquire reading information (measured values) and the like from a plurality of smart meters. The plurality of communication devices 1 perform multi-hop communication. That is, the plurality of communication devices 1 are used in a plurality of smart meters configured to perform the multi-hop communication.

As illustrated in FIG. 1, each communication device 1 according to the basic aspect includes a storage 2, a communicator 3, and a processing section 4. Each communication device 1 includes a microcomputer including a processor and a memory as a main component.

The storage 2 stores at least one encryption key. For example, the storage 2 stores a new key (updated key) and a pre-update (one-generation-old) key as encryption key group. In this case, the storage 2 stores two encryption keys. The storage 2 further stores a program for causing the processing section 4 to run. The storage 2 is, for example, a non-volatile memory or a hard disk drive.

The communicator 3 is a wireless communication module for wireless communication with another communication device 1 included in the communication system 5. The communicator 3 includes a transmitter 31 and a receiver 32 and includes a wireless chip as a main component. The transmitter 31 transmits encrypted data encrypted by an encryptor 41 which will be described later to the another communication device 1. The receiver 32 receives encrypted data from the another communication device 1 which is a transmission source node.

The processing section 4 includes the encryptor 41, a decryptor 42, and a key updater 43, and includes a processor as a main component.

The encryptor 41 encrypts data by using any one encryption key of the encryption key group stored in the storage 2. The decryptor 42 decrypts the encrypted data received by the receiver 32 by using any one encryption key of the encryption key group stored in the storage 2.

The key updater 43 periodically updates the encryption key group. In other words, the key updater 43 acquires a new key from the key management device 6 at a prescribed timing to update the combination of the encryption keys stored in the storage 2. The key updater 43 acquires the new key at a prescribed timing to update the combination of the encryption keys stored in the storage 2. At the time of a key update, the new key is distributed from the key management device 6 by unicast or multicast.

Moreover, when the decryptor 42 fails decryption, the key updater 43 performs reacquisition operation for acquiring the new key regardless of the prescribed timing. The reacquisition operation is operation of acquiring the new key regardless of the prescribed timing to update the combination of the encryption keys stored in the storage 2. Here, "when the decryptor 42 fails decryption" means when the encryption keys stored in the storage 2 are different from a key used for encryption in the transmission source node.

Next, operation between the two communication devices 1 according to the basic aspect will be described.

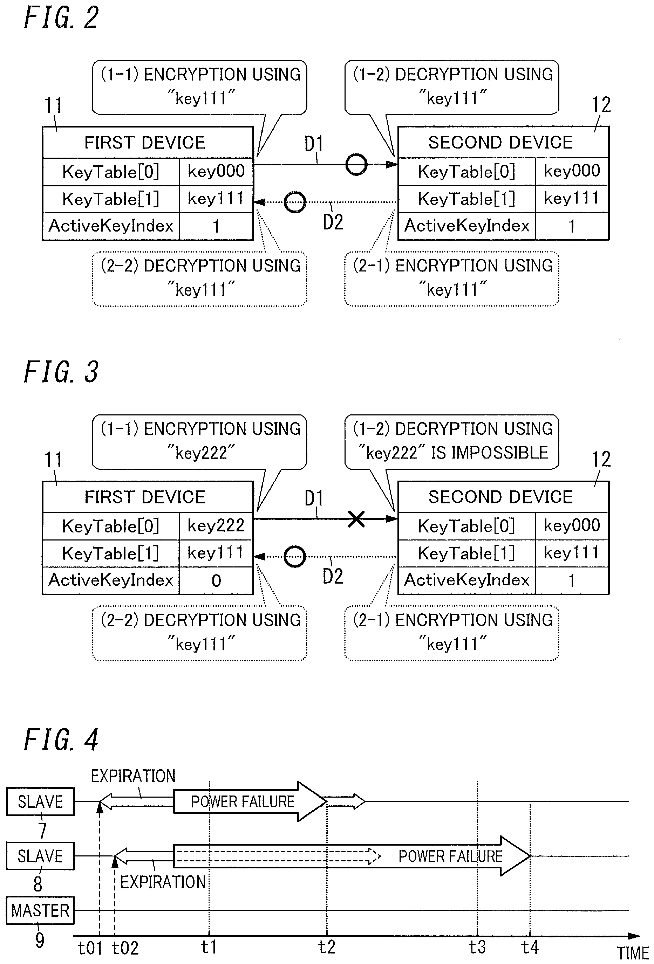

First, with reference to FIG. 2, an example will be described in which both of the two communication devices 1 are devices which have succeeded in a key update (hereinafter referred to as "update success device"). Here, one of the two communication devices 1 is defined as a first device 11 and the other of the two communication devices 1 is defined as a second device 12. Both of the first device 11 and the second device 12 have succeeded in the key update and thus each have acquired a new key ("key111" of FIG. 2).

For transmission of encrypted data D1 from the first device 11 to the second device 12, the first device 11 encrypts data by using the new key ("key111" of FIG. 2) as an encryption key ((1-1) of FIG. 2) to transmit encrypted data D1 to the second device 12. The second device 12 receives the encrypted data D1 from the first device 11. Since the second device 12 has succeeded in the key update and has acquired the new key ("key111" of FIG. 2), the second device 12 can decrypt the encrypted data D1 ((1-2) of FIG. 2), which the second device 12 has received. Thus, the second device 12 succeeds in decryption.

In contrast, for transmission of encrypted data D2 from the second device 12 to the first device 11, the second device 12 encrypts data by using the new key ("key111" of FIG. 2) as an encryption key ((2-1) of FIG. 2) and transmits encrypted data D2 to the first device 11. The first device 11 receives the encrypted data D2 from the second device 12. Since the first device 11 has succeeded in the key update and has acquired the new key ("key111" of FIG. 2), the first device 11 can decrypt the encrypted data D2 ((2-2) of FIG. 2), which the first device 11 has received. Thus, the first device 11 succeeds in decryption.

Subsequently, with reference to FIG. 3, an example will be described in which one of the two communication devices 1 is an update success device which has succeeded in a key update and the other of the two communication devices is a device which has failed the key update (hereinafter referred to as an "update failure device"). Here, the first device 11 is the update success device, and the second device 12 is the update failure device. Since the first device 11 has succeeded in the key update, the first device 11 has acquired a new key ("key222" of FIG. 3). In contrast, since the second device 12 has failed the key update, the second device 12 has not acquired a new key ("key222" of FIG. 3).

For transmission of encrypted data D1 from the first device 11 to the second device 12, the first device 11 first encrypts data by using the new key ("key222" of FIG. 3) ((1-1) of FIG. 3) to obtain encrypted data D1. Then, the first device 11 transmits the encrypted data D1 to the second device 12. Then, the second device 12 receives the encrypted data D1 from the first device 11. Since the second device 12 has failed the key update and has not acquired the new key ("key222" of FIG. 3), the second device 12 fails to decrypt the encrypted data D1, which the second device 12 has received ((1-2) of FIG. 3). Then, the second device 12 performs reacquisition operation for acquiring the new key ("key222" of FIG. 3) to update the encryption key. As described above, the reacquisition operation by the second device 12 can be realized.

In the above case, the second device 12 fails the decryption because of the second device 12 which has failed the key update but not because of the first device 11 which is the transmission source node, and therefore the second device 12 performs the reacquisition operation.

In contrast, for transmission of encrypted data D2 from the second device 12 to the first device 11, the second device 12 first encrypts data by using the key ("key111" of FIG. 3 which is a one-generation-old key for the first device 11) which is new for the second device 12 ((2-1) of FIG. 3) to obtain encrypted data D2. Then, the second device 12 transmits the encrypted data D2 to the first device 11. Then, the first device 11 receives the encrypted data D2 from the second device 12. Since the first device 11 has stored the one-generation-old key ("key111" of FIG. 3), the first device 11 decrypts the encrypted data D2, which the first device 11 has received, by using the one-generation-old key ((2-2) of FIG. 3).

### First Embodiment

A communication device 1 according to a first embodiment is different from the communication device 1 according to the basic aspect in that when the communication device 1 according to the first embodiment fails decryption, the communication device 1 according to the first embodiment determines, by using expiration of an encryption key, whether or not reacquisition operation for acquisition of the encryption key is to be performed regardless of a prescribed timing. Note that components similar to those of the communication device 1 according to the basic aspect are denoted by the same reference signs, and the description thereof is omitted.

First, in a transmission source node (communication device 1) for transmitting encrypted data, an updater 43 calculates expiration of an encryption key when updating the encryption key. In other words, the key updater 43 sets the expiration of a new key as the encryption key when updating the encryption key. A time length from an update timing until the expiration is longer than a period of a key update performed at a prescribed timing and shorter than two times the period of the key update. That is, the time length until the expiration is longer than a time period until the next key update timing and shorter than a time period until a key update timing after the next key update timing. The expiration is between the next key update timing and the key update timing after the next key update timing. Moreover, the key updater 43 performs reacquisition operation when the current time at an activation timing at a recovery from, for example, a power failure has past the expiration. Note that the description of functions similar to those of the key updater 43 of the basic aspect will be omitted.

As described above, the expiration is not externally acquired, but the key updater 43 calculates the expiration, and therefore, which enables a reduction in traffic for the expiration. For example, it is possible to reduce a packet size as compared to a case where the expiration is distributed together with the new key as the encryption key. Moreover, as compared to a case where the expiration is distributed after the key update, the number of packets can be reduced.

A storage 2 stores the expiration of the encryption key together with the encryption key. Even when the operation of the communication device 1 is stopped due to a power failure or the like, the storage 2 maintains the encryption key and the expiration. The storage 2 is, for example, a non-volatile memory or a hard disk drive. Note that the description of functions similar to those of the storage 2 of the basic aspect will be omitted.

Note that in a receiving-side node (communication device 1) which receives the encrypted data, a key updater 43 performs reacquisition operation for acquiring a new key regardless of the prescribed timing when a decryptor 42 fails decryption and a prescribed condition attributed to the transmission source node is not satisfied. In the first embodiment, the prescribed condition is that the current time in the transmission source node has past the expiration of the encryption key. More specifically, the prescribed condition attributed to the transmission source node is that the current time is past the expiration of the encryption key used for encryption in the transmission source node. When the prescribed condition is not satisfied, it is possible to determine at the receiving-side node that failed decryption by the decryptor 42 is a failed update of an encryption key by the key updater 43, and the reacquisition operation can be performed early.

In contrast, the key updater 43 does not perform the reacquisition operation when the decryptor 42 fails the decryption and the above-described prescribed condition is satisfied. In the first embodiment, even when the decryptor 42 fails the decryption, the key updater 43 does not perform the reacquisition operation if the current time in the transmission source node passes the expiration of the encryption key.

More specifically, the current time is past the expiration of the encryption key used for the encryption in the transmission source node because the transmission source node failed the key update. That is, a failure of the decryption is caused because the transmission source node failed the key update. The above case corresponds to a case where the decryptor 42 fails the decryption and the prescribed condition attributed to the transmission source node is satisfied. Thus, the receiving-side node does not have to perform the reacquisition operation.

Next, with reference to FIG. 4, operation of the communication device 1 according to the first embodiment will be described. The communication devices 1 ("slave 7" and "slave 8" of FIG. 4) each acquire a new key from a key management device 6 ("master 9" of FIG. 4) to update an encryption key in the communication device 1. In this case, the communication device 1 sets expiration of the encryption key which is the new key.

Specifically, the slave 7 acquires at a time t01, a new key as an encryption key and sets the expiration of the new key. The slave 8 acquires at a time t02, a new key as an encryption key and sets the expiration of the new key. The new key acquired by the slave 7 is identical to the new key acquired by the slave 8. The time t01 and the time t02 may be the same or may be different.

In FIG. 4, when a power failure occurs before a time t1 which is a timing at which the key updater 43 updates the encryption key, operation of the communication device 1 stops. The communication device 1 is not operating at the time t1, and therefore, the communication device 1 cannot update the encryption key. Then, in a case where the power failure ends at a time t2, even when the communication device 1 corresponding to "slave 7" in FIG. 4 receives encrypted data encrypted by the transmission source node by using the new key after the end of the power failure, the communication device 1 cannot decrypt the encrypted data because the communication device 1 did not acquire the new key at the time t1.

In the above case, since the transmission source node has succeeded in the key update, the failure of the decryption is not due to the transmission source node. That is, the above case corresponds to a case where the decryptor 42 fails the decryption and the prescribed condition attributed to the transmission source node is satisfied. Thus, the key updater 43 in the communication device 1 corresponding to the "slave 7" of FIG. 4 performs the reacquisition operation.

In contrast, the communication device 1 corresponding to "slave 8" of FIG. 4 is not operating due to the power failure not only at the time t1 but also at a time t3 which is a timing at which the encryption key is next updated. Thus, the communication device 1 cannot update the encryption key. Then, when the power failure ends at a time t4, the communication device 1 is activated. In this case, since the time at which the communication device 1 corresponding to the "slave 8" of FIG. 4 is activated is past the expiration, the communication device 1 performs the reacquisition operation for acquiring a new key. In this way, the encryption key can be updated, and therefore, the failure of the decryption in subsequent communication can be prevented in advance.

In the above case, the failure of the decryption is caused because the current time in the communication device 1 which is the receiving-side node is past the expiration stored in the storage 2 but not because of the transmission source node. That is, the above case corresponds to a case where the decryptor 42 fails the decryption and the prescribed condition attributed to the transmission source node is not satisfied. Thus, the key updater 43 in the communication device 1 corresponding to the "slave 8" of FIG. 4 performs the reacquisition operation.

The communication device 1 according to the first embodiment described above includes the storage 2, a receiver 32, the decryptor 42, and the key updater 43. The storage 2 is configured to store an encryption key group including at least one encryption key. The receiver 32 is configured to receive encrypted data from a transmission source node. The decryptor 42 is configured to perform decryption of the encrypted data received by the receiver 32 by using one encryption key included in the encryption key group stored in the storage 2. The key updater 43 is configured to acquire a new key at a prescribed timing to update the encryption key group in the storage 2. The key updater 43 performs reacquisition operation for acquiring the new key to update the encryption key group in the storage 2 regardless of the prescribed timing when the decryptor 42 fails the decryption and a prescribed condition attributed to the transmission source node is not satisfied. The key updater 43 does not perform the reacquisition operation when the decryptor 42 fails the decryption and the prescribed condition is satisfied.

In the communication device 1 according to the first embodiment, when the decryptor 42 fails to decrypt the encrypted data, the key updater 43 basically performs the reacquisition operation for acquiring a new key. Thus, a failed update of the encryption key can be detected early, and therefore, the encryption key can be updated earlier than the next update timing. As a result, early recovery of the communication is possible. In contrast, even when the decryptor 42 fails the decryption, the reacquisition operation is not performed if the prescribed condition attributed to the transmission source node is satisfied. This can reduce unnecessary reacquisition operation by the receiving-side node, and therefore the reliability of updating of the encryption key group can be increased.

In the communication device 1 according to the first embodiment, the storage 2 preferably stores expiration of the one encryption key together with the one encryption key. The key updater 43 preferably performs the reacquisition operation when a current time is past the expiration.

In the communication device 1 according to the first embodiment, the key updater 43 performs the reacquisition operation when the current time is past the expiration. In this way, the encryption key can be updated before transmission of the encrypted data. Thus, it is possible to reduce likelihood that failed decryption by a node which has succeeded in a key update is deemed to be a failed key update and the reacquisition operation is performed.

In the communication device 1 according to the first embodiment, the key updater 43 preferably performs the reacquisition operation when the current time at the activation is past the expiration.

In the communication device 1 according to the first embodiment, the key updater 43 performs the reacquisition operation when the current time is past the expiration at an activation timing after the occurrence of, for example, a power failure. In this way, the encryption key can be updated before transmission of the encrypted data. Thus, it is possible to reduce likelihood that failed decryption by a node which has succeeded in a key update is deemed to be a failed key update and the reacquisition operation is performed.

In the communication device 1 according to the first embodiment, the key updater 43 preferably calculates the expiration.

According to the communication device 1 of the first embodiment, transmission of a signal for notifying of the expiration is not necessary, and thus, traffic can be reduced.

A communication system 5 according to the first embodiment includes a plurality of the communication devices 1.

The communication system 5 according to the first embodiment enables early and reliable detection of a failure of a key update.

The communication system 5 according to the first embodiment preferably further includes the key management device 6. The key management device 6 manages the encryption key. The key updater 43 preferably acquires the new key from the key management device 6.

According to the communication system 5 of the first embodiment, the encryption key can be stably managed.

In the communication system 5 according to the first embodiment, the plurality of communication devices 1 preferably perform multi-hop communication.

In the communication system 5 according to the first embodiment, the plurality of communication devices 1 perform multi-hop communication. In this way, for performing communication between the communication devices 1, even if the communication cannot be directly performed between the communication devices 1 which attempt to transmit information, another communication device 1 can be used as a relay for relaying the communication.

Note that in a variation of the first embodiment, when updating an encryption key, the key updater 43 does not have to calculate the expiration of the encryption key but may acquire the expiration from the key management device 6. A method for distributing the expiration is not particularly limited. The expiration may be distributed by unicast for each communication device 1 or may be distributed by multicast for all the communication devices 1 at once. Moreover, the expiration may be distributed in the same packet as the new key or may be distributed in a packet different from the packet of the new key. According to the communication device 1 of the present variation, the key management device 6 can optimally manage the expiration of the encryption key, and therefore, the degree of accuracy of the expiration can be increased.

### Second Embodiment

A communication device 1 according to a second embodiment is different from the communication device 1 according to the basic aspect in that even when the communication device 1 according to the second embodiment fails decryption, the communication device 1 according to the second embodiment does not perform reacquisition operation for acquiring a new key until the communication device 1 according to the second embodiment receives, from another communication device 1 serving as a transmission source node, a response serving as a key invalidity notification in response to a confirmation request. Note that components similar to those of the communication device 1 according to the basic aspect are denoted by the same reference signs, and the description thereof is omitted.

When a decryptor 42 fails to decrypt encrypted data, a transmitter 31 of the second embodiment transmits a confirmation request encrypted by using an encryption key stored in a storage 2 to another communication device 1 serving as a transmission source node which has transmitted the encrypted data. Note that the description of functions similar to those of the transmitter 31 of the basic aspect is omitted.

A receiver 32 of the second embodiment receives, from the transmission source node, a response to the confirmation request. Here, the transmission source node has succeeded in updating the encryption key and has acquired a new key. That is, the transmission source node acquires the new key before receiving the confirmation request. The response to the confirmation request is encrypted by the transmission source node by using an encryption key identical to that of the confirmation request when the encryption key, which is stored in the storage 2 and has been used for the decryption of the confirmation request, is not the new key in the transmission source node. That is, in the above case, the response to the confirmation request is encrypted by using a key which is not the new key in the transmission source node. The response is a key invalidity notification for notifying that the encryption key is invalid. In contrast, when in the transmission source node, the confirmation request is decrypted by using the new key in the transmission source node, the response to the confirmation request is not transmitted from the transmission source node. That is, the receiver 32 does not receive the response to the confirmation request from the transmission source node. Note that the description of the same functions as those of the receiver 32 of the basic aspect will be omitted.

Even when the decryptor 42 fails the decryption, the key updater 43 of the second embodiment does not perform the reacquisition operation for acquiring a new key until the key updater 43 receives the response to the confirmation request. In the second embodiment, the prescribed condition attributed to the transmission source node is that even when the decryptor 42 fails the decryption, a response to the confirmation request has not been received. Note that the description of functions similar to those of the key updater 43 of the basic aspect will be omitted.

Next, operation between two communication devices 1 according to the second embodiment will be described. One of the two communication devices is an update success device which has succeeded in a key update, and the other of the two communication devices is an update failure device which has failed the key update. Here, a first device is the update success device, and a second device is the update failure device.

For transmission of encrypted data from the first device to the second device, the first device encrypts data by using a new key (first key) to obtain encrypted data and transmits the encrypted data to the second device. The second device receives the encrypted data from the first device. However, since the second device has failed the key update and has not acquired the new key (first key), the second device fails to decrypt the encrypted data.

Then, the second device encrypts a confirmation request by using a key (a one-generation-old key for the first device, a second key) which is new for the second device to obtain an encrypted confirmation request, and the second device transmits the encrypted confirmation request to the first device. The first device receives the confirmation request from the second device. Since the first device has the one-generation-old key (second key), the first device decrypts the received confirmation request by the one-generation-old key (second key). Then, the first device encrypts the key invalidity notification by the one-generation-old key (the key which is new for the second device, the second key) to obtain an encrypted key invalidity notification, and transmits the encrypted key invalidity notification to the second device.

When the second device receives the key invalidity notification from the first device, the second device decrypts the received response by using the key (the one-generation-old key for the first device, second key) which is new for the second device. Then, the second device performs reacquisition operation and acquires a new key (first key) to update the encryption key.

In contrast, for transmission of encrypted data from the second device to the first device, the second device encrypts data with a key (a key of one-generation old for the first device, second key) which is new for the second device to obtain encrypted data and transmits the encrypted data to the first device. The first device receives the encrypted data from the second device. Since the first device has the one-generation-old key (second key), the first device decrypts the encrypted data by using the one-generation-old key (second key).

Then, the first device encrypts a key invalidity notification by the one-generation-old key (second key) to obtain an encrypted key invalidity notification and transmits the encrypted key invalidity notification to the second device. The second device receives the key invalidity notification from the first device. The second device decrypts the key invalidity notification by the key (the one-generation-old key for the first device, second key) which is new for the second device. Then, the second device performs reacquisition operation and acquires a new key (first key) to update the encryption key.

The communication device 1 according to the second embodiment described above further includes a transmitter 31. The transmitter 31 is configured, when the decryptor 42 fails the decryption, to transmit a confirmation request encrypted by using the one encryption key stored in the storage 2 to the transmission source node. The transmission source node has acquired the new key before receiving the confirmation request. The receiver 32 receives a response when the one encryption key stored in the storage 2 is not the new key in the transmission source node, the response being encrypted by the transmission source node by using an encryption key identical to the one encryption key by which the confirmation request is encrypted. Even when the decryptor 42 fails the decryption, the key updater 43 does not perform the reacquisition operation if the prescribed condition is satisfied, the prescribed condition being that the response to the confirmation request has not been received.

According to the communication device 1 of the second embodiment, it is possible to reduce likelihood that despite a success of a key update, the key update is deemed to be failed and the reacquisition operation is performed.

### Third Embodiment

A communication device 1 according to a third embodiment is different from the communication device 1 according to the basic aspect in that when the number of times of failures of decryption is small, the communication device 1 according to the third embodiment does not perform reacquisition operation for acquiring a new key. Note that components similar to those of the communication device 1 according to the basic aspect are denoted by the same reference signs, and the description thereof is omitted.

Similarly to the storage 2 of the basic aspect, a storage 2 of the third embodiment stores a new key and a pre-update key (a one-generation-old key) as an encryption key group.

A decryptor 42 of the third embodiment counts the total number of times that the decryption fails in both cases of using the new key and using the one-generation old key. Then, the decryptor 42 resets the total number of times of failure of the decryption when the decryption is successfully performed or when a prescribed time has elapsed since a first or last failure of the decryption. Note that the description of functions similar to those of the decryptor 42 of the basic aspect will be omitted.

Even when the decryptor 42 fails the decryption, a key updater 43 of the third embodiment does not perform the reacquisition operation for acquiring a new key if the total number of times counted by the decryptor 42 is smaller than the threshold. In the third embodiment, the prescribed condition attributed to the transmission source node is that even when the decryptor 42 fails the decryption, the total number of times counted by the decryptor 42 is smaller than the threshold. Note that the description of functions similar to those of the key updater 43 of the basic aspect will be omitted.

Next, operation between two communication devices 1 according to the third embodiment will be described. One of the two communication devices is an update success device which has succeeded in a key update, and the other of the two communication devices is an update failure device which has failed the key update. Here, a first device is the update success device, and a second device is the update failure device. When encrypted data is transmitted from the first device to the second device, the first device serves as the transmission source node, and the second device serves as the receiving-side node. In contrast, when encrypted data is transmitted from the second device to the first device, the second device serves as the transmission source node, and the first device serves as the receiving-side node.

For transmission of encrypted data from the first device to the second device, the first device encrypts data by using a new key (first key) to obtain encrypted data and transmits the encrypted data to the second device. The second device receives the encrypted data from the first device. However, since the second device has failed the key update and has not acquired the new key (first key), the second device fails to decrypt the encrypted data. Then, the second device increases the total number of times of failure of the decryption by one.

Here, when the total number of times of failure of decryption is smaller than the threshold, the second device does not perform the reacquisition operation. In contrast, when the total number of times of failure of decryption reaches the threshold, the second device performs the reacquisition operation and acquires the new key (first key) to update the encryption key.

In contrast, for transmission of encrypted data from the second device to the first device, the second device encrypts data with a key (a key of one-generation old for the first device, second key) which is new for the second device to obtain encrypted data and transmits the encrypted data to the first device. The first device receives the encrypted data from the second device. Since the first device has the one-generation-old key (second key), the first device decrypts the encrypted data by the one-generation-old key (second key). Here, the first device has succeeded in the key update and the total number of times of failure of the decryption is smaller than the threshold, the first device does not perform the reacquisition operation. Thus, it is possible to reduce unnecessary reacquisition operation by the first device.

The above case corresponds to a case where even when the decryptor 42 fails the decryption, the total number of times counted by the decryptor 42 is smaller than the threshold. Thus, the first device does not perform the reacquisition operation.

In the communication device 1 according to the third embodiment described above, the storage 2 stores at least the new key and the pre-update key as the encryption key group. The decryptor 42 counts the total number of times of failure of the decryption in both cases of using the new key and using the pre-update key. Even when the decryptor 42 fails the decryption, the key updater 43 does not perform the reacquisition operation if the prescribed condition is satisfied, the prescribed condition being that the total number of times counted by the decryptor 42 is smaller than the threshold.

According to the communication device 1 of the third embodiment, when all keys as the encryption key group do not match between the communication device 1 and the transmission source node, and the number of nodes which have succeeded in the key update is larger than the number of nodes failed the key update, it is possible to reduce likelihood that failed decryption by a node which has succeeded in a key update is deemed to be a failed key update and the reacquisition operation is performed.

In the communication device 1 according to the third embodiment, the decryptor 42 preferably resets the total number of times of failure of the decryption when the decryption is successfully performed or when the prescribed time has elapsed since the first or last failure of the decryption.

In the communication device 1 according to the third embodiment, it is possible to increase the degree of the count accuracy of the total number of times of failure of decryption. Therefore, it is possible to further reduce the number of times that a node succeeded in the key update is erroneously determined that the node failed the key update.

As a variation of the third embodiment, the communication device 1 may limit a target whose total number of times of failure of decryption is to be counted to encrypted data from specific transmission source nodes. The communication device 1 of the present variation enables a reduction in the number of times of erroneous detection of the key update due to a node which does not have to be taken into consideration.

Moreover, as a variation of the third embodiment, when the communication device 1 successively receives encrypted data from an identical transmission source node, the number of times of failure of decryption may be counted as one. The communication device 1 of the present variation enables a reduction in a difference in occurrence frequency of decryption failure caused by the occurrence of successive transmission of encrypted data which cannot be decrypted. This can reduce, for example, influence of successive transmission of encrypted data resulting in decryption failure from a malicious node.

### Fourth Embodiment

A communication device 1 according to a fourth embodiment is different from the communication device 1 according to the basic aspect in that when an encryption key is acquired and the encryption key is not changed, reacquisition operation for acquiring a new key is not performed for a certain time period. Note that components similar to those of the communication device 1 according to the basic aspect are denoted by the same reference signs, and the description thereof is omitted.

Even when a decryptor 42 failed decryption, a key updater 43 of the fourth embodiment does not perform the reacquisition operation for acquiring an encryption key, if when one encryption key has been acquired in a past, the one encryption key is not changed, and a definite time period has not elapsed since the decryptor 42 failed the decryption. In the fourth embodiment, the prescribed condition attributed to the transmission source node is that even when the decryptor 42 failed the decryption, the encryption key is not changed when the encryption key has been reacquired in the past, and the definite time period has not elapsed since the decryptor 42 failed the decryption. The definite time period is, for example, a time period from a failure of the decryption by the decryptor 42 to expiration. Note that the description of functions similar to those of the key updater 43 of the basic aspect will be omitted.

Next, operation between two communication devices 1 according to the fourth embodiment will be described. One of the two communication devices is an update success device which has succeeded in a key update, and the other of the two communication devices is an update failure device which has failed the key update. Here, a first device is the update success device, and a second device is the update failure device. The first device has the new key (first key) and the one-generation-old key (second key). The second device has the first key and a third key different from the second key.

For transmission of encrypted data from the first device to the second device, the first device decrypts data by using a new key as the encryption key (first key) to obtain encrypted data and transmits the encrypted data to the second device. The second device receives the encrypted data from the first device. However, since the second device has failed the key update and has not acquired the new key (first key), the second device fails to decrypt the encrypted data. Then, the second device performs reacquisition operation and acquires a new key (first key) to update the encryption key.

In contrast, for transmission of encrypted data from the second device to the first device, the second device decrypts data by a key (the third key which the first device does not have) which is new for the second device to obtain encrypted data and transmits the encrypted data to the first device. The first device receives the encrypted data from the second device. However, since the first device does not have the encryption key (third key) used for encryption, the first device fails to decrypt the encrypted data, which the first device has received. Then, since the first device fails to decrypt the encrypted data, the first device performs the reacquisition operation. However, since the first device has already performed a key update, the encryption key is not changed. Then, the first device counts the definite time period.

Then, the second device encrypts data by a key (a third key which the first device does not have) which is new for the second device to obtain encrypted data and transmits the encrypted data to the first device. The first device receives the encrypted data from the second device. Similarly to the above-described cases, since the first device does not have the encryption key (third key) used for decryption, the first device fails to decrypt the encrypted data, which the first device has received.

Here, even when the first device failed the decryption, the first device does not perform the reacquisition operation if the definite time period has not elapsed. In contrast, if the definite time period has elapsed, the first device performs the reacquisition operation because the first device failed the decryption. However, since the key update has already been performed, the encryption key is not changed.

In the communication device 1 according to the fourth embodiment described above, even when the decryptor 42 failed the decryption, the key updater 43 does not perform the reacquisition operation if the condition is satisfied, the condition being that when the encryption key has been acquired in the past, the encryption key is not changed, and the definite time period has not elapsed since the decryptor 42 failed the decryption.

According to the communication device 1 of the fourth embodiment, it is possible to reduce the number of times that the reacquisition operation is successively performed in a node which has succeeded in a key update, although the key update has successfully been performed.

In a variation of the fourth embodiment, the key updater 43 may be configured not to perform the reacquisition operation only in a case where encrypted data from another communication device 1 serving as a transmission source node fails to be decrypted if the prescribed condition is satisfied even when the decryptor 42 fails the decryption.

In a variation of the fourth embodiment, in the communication device 1, the storage 2 may be configured to store a transmission source node which had transmitted the encrypted data whose decryption failed, and even when the decryptor 42 fails the decryption, the key updater 43 may be configured not to perform the reacquisition operation only in a case where the encrypted data from the transmission source node fails to be decrypted if the prescribed condition is satisfied. The prescribed condition is that the one encryption key is not changed when the one encryption key has been reacquired in a past, and a definite time period has not elapsed since the decryptor 42 failed the decryption.

According to the communication device 1 of the present variation, the transmission source nodes are classified, which enables a reduction in the number of times that a failure of a key update is successively determined.

In the basic aspect and the first to fourth embodiments, the storage 2 stores the new key and the pre-update key (the key of one-generation old), that is, two keys as an encryption key group. However, the storage 2 may store only one encryption key as the encryption key group or three or more keys as the encryption key group. When the storage 2 stores only one encryption key, the storage 2 stores only an updated key, that is, a new key as the encryption key group. When the storage 2 stores three or more encryption keys, the storage 2 stores not only a new key and a one-generation-old key but also a two-generation old key and the like as the encryption key group.

Moreover, as a variation of the basic aspect and the first to fourth embodiments, in the communication device 1, the storage 2 may store the encryption key group including only one encryption key, and when the decryptor 42 fails decryption, the key updater 43 may notify the transmission source node of a failure of the decryption by the decryptor 42. The communication device 1 of the present variation enables early notification of a failure of a key update.

Further, as a variation of the basic aspect and the first to fourth embodiments, the storage 2 may store at least the new key and a pre-update key as the encryption key group, and when the decryptor 42 performs decryption by the pre-update key, the key updater 43 may notify the transmission source node of a request for updating the encryption key group.

The communication device 1 of the present variation enables an early notification of a failure of a key update by the transmission source node.

Furthermore, as a variation of the basic aspect and the first to fourth embodiments, the receiver 32 may receive encrypted data encrypted by using the one encryption key at a definite period. The encrypted data is transmitted from another communication device 1 such as a master.

The communication device 1 of the present variation enables reliable generation of encrypted data, and therefore, the maximum time period required to detect a failure of a key update can be reduced to a definite time period.

### Reference Signs List

- 1: Communication Device
- 2: Storage
- 31: Transmitter
- 32: Receiver
- 42: Decryptor
- 43: Key Updater
- 5: Communication System
- 6: Key Management Device

## Claims

1. A communication device (1), comprising:
a storage (2) configured to store an encryption key group including at least one encryption key;
a receiver (32) configured to receive encrypted data from a transmission source node;
a decryptor (42) configured to perform decryption of the encrypted data received by the receiver (32) by using one encryption key in the encryption key group stored in the storage (2); and
a key updater (43) configured to acquire a new key at a prescribed timing to update the encryption key group in the storage (2), wherein
the key updater (43) performs reacquisition operation for acquiring the new key to update the encryption key group in the storage (2) regardless of the prescribed timing when the decryptor (42) fails the decryption and a prescribed condition attributed to the transmission source node is not satisfied, and
the key updater (43) does not perform the reacquisition operation when the decryptor (42) fails the decryption and the prescribed condition is satisfied.

2. The communication device (1) according to claim 1, wherein
the storage (2) stores expiration of the one encryption key together with the one encryption key, and
the key updater (43) performs the reacquisition operation when a current time is past the expiration.

3. The communication device (1) according to claim 2, wherein
the key updater (43) calculates the expiration.

4. The communication device (1) according to any one of claims 1 to 3, further comprising:
a transmitter (31) configured, when the decryptor (42) fails the decryption, to transmit a confirmation request encrypted by using the one encryption key stored in the storage (2) to the transmission source node, wherein
the transmission source node has acquired the new key before receiving the confirmation request,
the receiver (32) receives a response which is, when the one encryption key stored in the storage (2) is not the new key in the transmission source node, encrypted by the transmission source node by using an encryption key identical to the one encryption key by which the confirmation request is encrypted, and
even when the decryptor (42) fails the decryption, the key updater (43) does not perform the reacquisition operation if the prescribed condition is satisfied, the prescribed condition being that the response to the confirmation request has not been received.

5. The communication device (1) according to any one of claims 1 to 3, wherein
the storage (2) stores at least the new key and a pre-update key as the encryption key group,
the decryptor (42) counts a total number of times of failure of the decryption in both cases of using the new key and using the pre-update key, and
even when the decryptor (42) fails the decryption, the key updater (43) does not perform the reacquisition operation if the prescribed condition is satisfied, the prescribed condition being that the total number of times counted by the decryptor (42) is smaller than a threshold.

6. The communication device (1) according to claim 5, wherein
the decryptor (42) resets the total number of times of failure of the decryption when the decryption is successfully performed or when a prescribed time has elapsed since a first or last failure of the decryption.

7. The communication device (1) according to any one of claims 1 to 3, wherein
even when the decryptor (42) failed the decryption, the key updater (43) does not perform the reacquisition operation if the prescribed condition is satisfied, the prescribed condition being that when the one encryption key has been acquired in a past, the one encryption key is not changed, and a definite time period has not elapsed since the decryptor (42) failed the decryption.

8. The communication device (1) according to claim 7, wherein
the storage (2) stores the transmission source node which had transmitted the encrypted data whose decryption failed, and
even when the decryptor (42) failed the decryption, the key updater (43) does not perform the reacquisition operation only in a case where the encrypted data from the transmission source node fails to be decrypted if the prescribed condition is satisfied, the prescribed condition being that the one encryption key is not changed when the one encryption key has been reacquired in a past, and the definite time period has not elapsed since the decryptor (42) failed the decryption.

9. The communication device (1) according to any one of claims 1 to 8, wherein
the receiver (32) receives the encrypted data encrypted by using the one encryption key at a definite period.

10. The communication device (1) according to any one of claims 1 to 4, wherein the storage (2) stores the encryption key group including only one encryption key, and when the decryptor (42) fails the decryption, the key updater (43) notifies the transmission source node of a failure of the decryption.

11. The communication device (1) according to any one of claims 1 to 9, wherein
the storage (2) stores at least the new key and a pre-update key as the encryption key group, and
when the decryptor (42) performs the decryption by the pre-update key, the key updater (43) notifies the transmission source node of a request for updating the encryption key group.

12. A communication system (5), comprising a plurality of the communication devices (1) according to any one of claims 1 to 11.

13. The communication system (5) according to claim 12, further comprising a key management device (6) configured to manage the encryption key group, wherein
the key updater (43) acquires the new key from the key management device (6).

14. The communication system (5) according to claim 12 or 13, wherein
the plurality of the communication devices (1) perform multi-hop communication.

## Patentansprüche

1. Kommunikationsvorrichtung (1), umfassend:
einen Speicher (2), der zum Speichern einer Verschlüsselungsschlüsselgruppe ausgelegt ist, die mindestens einen Verschlüsselungsschlüssel enthält;
einen Empfänger (32), der zum Empfangen verschlüsselter Daten von einem Übertragungsursprungsknoten ausgelegt ist;
einen Entschlüsseler (42), der zum Durchführen einer Entschlüsselung der vom Empfänger (32) empfangenen verschlüsselten Daten unter Verwendung eines Verschlüsselungsschlüssels der im Speicher (2) gespeicherten Verschlüsselungsschlüsselgruppe ausgelegt ist; und
einen Schlüsselaktualisierer (43), der zum Erfassen eines neuen Schlüssels zu einem vorgegebenen Zeitpunkt zum Aktualisieren der Verschlüsselungsschlüsselgruppe im Speicher (2) ausgelegt ist, wobei
der Schlüsselaktualisierer (43) einen Neuerfassungsvorgang zum Erfassen des neuen Schlüssels zum Aktualisieren der Verschlüsselungsschlüsselgruppe im Speicher (2) ungeachtet des vorgegebenen Zeitpunkts durchführt, wenn der Entschlüsseler (42) bei der Entschlüsselung versagt und eine dem Übertragungsursprungsknoten zugeordnete vorgegebene Bedingung nicht erfüllt ist, und
der Schlüsselaktualisierer (43) keinen Neuerfassungsvorgang durchführt, wenn der Entschlüsseler (42) bei der Entschlüsselung versagt und eine dem Übertragungsursprungsknoten zugeordnete vorgegebene Bedingung erfüllt ist.

2. Kommunikationsvorrichtung (1) nach Anspruch 1, wobei der Speicher (2) den Ablauf des einen Verschlüsselungsschlüssels zusammen mit dem einen Verschlüsselungsschlüssel gespeichert und
der Schlüsselaktualisierer (43) den Neuerfassungsvorgang durchführt, wenn eine aktuelle Zeit nach dem Ablauf liegt.

3. Kommunikationsvorrichtung (1) nach Anspruch 2, wobei der Schlüsselaktualisierer (43) den Ablauf berechnet.

4. Kommunikationsvorrichtung (1) nach einem der Ansprüche 1 bis 3, ferner umfassend:
einen Sender (31), der zum Senden einer Bestätigungsanforderung, die unter Verwendung des im Speicher (2) gespeicherten einen Verschlüsselungsschlüssels verschlüsselt ist, an den Übertragungsursprungsknoten ausgelegt ist, wenn der Entschlüsseler (42) bei der Entschlüsselung versagt, wobei
der Übertragungsursprungsknoten den neuen Schlüssel vor Empfangen der Bestätigungsanforderung erfasst hat;
der Empfänger (32) eine Antwort empfängt, die vom Übertragungsursprungsknoten unter Verwendung eines Verschlüsselungsschlüssels verschlüsselt ist, der mit dem einen Verschlüsselungsschlüssel, mit dem die Bestätigungsanforderung verschlüsselt ist, identisch ist, wenn der im Speicher (2) gespeicherte eine Verschlüsselungsschlüssel nicht der neue Schlüssel im Übertragungsursprungsknoten ist, und
selbst wenn der Entschlüsseler (42) bei der Entschlüsselung versagt, der Schlüsselaktualisierer (43) keinen Neuerfassungsvorgang durchführt, wenn die vorgegebene Bedingung erfüllt ist, wobei die vorgegebene Bedingung darin besteht, dass die Antwort auf die Bestätigungsanforderung nicht empfangen wurde.

5. Kommunikationsvorrichtung (1) nach einem der Ansprüche 1 bis 3, wobei
der Speicher (2) mindestens den neuen Schlüssel und einen Voraktualisierungsschlüssel als Verschlüsselungsschlüsselgruppe speichert,
der Entschlüsseler (42) eine Gesamtanzahl an Versagungszeiten der Entschlüsselung sowohl unter Verwendung des neuen Schlüssels als auch unter Verwendung des Voraktualisierungsschlüssels zählt und
selbst wenn der Entschlüsseler (42) bei der Entschlüsselung versagt, der Schlüsselaktualisierer (43) keinen Neuerfassungsvorgang durchführt, wenn die vorgegebene Bedingung erfüllt ist, wobei die vorgegebene Bedingung darin besteht, dass die Gesamtanzahl der vom Entschlüsseler (42) gezählten Zeiten kleiner als ein Schwellenwert ist.

6. Kommunikationsvorrichtung (1) nach Anspruch 5, wobei der Entschlüsseler (42) die Gesamtanzahl an Versagungszeiten der Entschlüsselung zurückgesetzt, wenn die Entschlüsselung erfolgreich durchgeführt wurde oder wenn eine vorgegebene Zeit seit einem ersten oder letzten Versagen der Entschlüsselung verstrichen ist.

7. Kommunikationsvorrichtung (1) nach einem der Ansprüche 1 bis 3, wobei
selbst wenn der Entschlüsseler (42) bei der Entschlüsselung versagt, der Schlüsselaktualisierer (43) keinen Neuerfassungsvorgang durchführt, wenn die vorgegebene Bedingung erfüllt ist, wobei die vorgegebene Bedingung darin besteht, dass der eine Verschlüsselungsschlüssel nicht geändert wird und dass eine festgelegte Zeitdauer seit dem Versagen des Entschlüsselers (42) bei der Entschlüsselung nicht verstrichen ist, wenn der eine Verschlüsselungsschlüssel in der Vergangenheit erfasst wurde.

8. Kommunikationsvorrichtung (1) nach Anspruch 7, wobei der Speicher (2) den Übertragungsursprungsknoten speichert, der die verschlüsselten Daten, deren Entschlüsselung versagt hat, übertragen hat, und
selbst wenn der Entschlüsseler (42) bei der Entschlüsselung versagt, der Schlüsselaktualisierer (43), nur für den Fall,
dass das Entschlüsseln der verschlüsselten Daten vom Übertragungsursprungsknoten versagt, keinen Neuerfassungsvorgang durchführt, wenn die vorgegebene Bedingung erfüllt ist, wobei die vorgegebene Bedingung darin besteht, dass der eine Verschlüsselungsschlüssel nicht geändert wird, wenn der eine Verschlüsselungsschlüssel in der Vergangenheit neu erfasst wurde, und dass die festgelegte Zeitdauer seit dem Versagen des Entschlüsselers (42) bei der Entschlüsselung nicht verstrichen ist.

9. Kommunikationsvorrichtung (1) nach einem der Ansprüche 1 bis 8, wobei
der Empfänger (32) die verschlüsselten Daten empfängt, die unter Verwendung des einen Verschlüsselungsschlüssels in einem festgelegten Zeitraum verschlüsselt wurden.

10. Kommunikationsvorrichtung (1) nach einem der Ansprüche 1 bis 4, wobei
der Speicher (2) die Verschlüsselungsschlüsselgruppe, die nur einen Verschlüsselungsschlüssel enthält, speichert und der Schlüsselaktualisierer (43) dem Übertragungsursprungsknoten ein Versagen der Entschlüsselung meldet, wenn der Entschlüsseler (42) bei der Entschlüsselung versagt.

11. Kommunikationsvorrichtung (1) nach einem der Ansprüche 1 bis 9, wobei
der Speicher (2) mindestens den neuen Schlüssel und einen Voraktualisierungsschlüssel als Verschlüsselungsschlüsselgruppe speichert, und
der Schlüsselaktualisierer (43) dem Übertragungsursprungsknoten eine Anforderung zum Aktualisieren der Verschlüsselungsschlüsselgruppe meldet, wenn der Entschlüsseler (42) die Entschlüsselung mittels des Voraktualisierungsschlüssels durchführt.

12. Kommunikationssystem (5), umfassend eine Vielzahl der Kommunikationsvorrichtungen (1) nach einem der Ansprüche 1 bis 11.

13. Kommunikationssystem (5) nach Anspruch 12, ferner umfassend eine Schlüsselverwaltungsvorrichtung (6), die zum Verwalten der Verschlüsselungsschlüsselgruppe ausgelegt ist, wobei der Schlüsselaktualisierer (43) den neuen Schlüssel von der Schlüsselverwaltungsvorrichtung (6) erfasst.

14. Kommunikationssystem (5) nach Anspruch 12 oder 13, wobei die Vielzahl von Kommunikationsvorrichtung (1) Multi-Hop-Kommunikation durchführt.

## Revendications

1. Dispositif de communication (1), comprenant :
une mémoire (2) configurée de manière à stocker un groupe de clés de chiffrement comprenant au moins une clé de chiffrement ;
un récepteur (32) configuré de manière à recevoir des données chiffrées en provenance d'un noeud source de transmission ;
un module de déchiffrement (42) configuré de manière à mettre en oeuvre un déchiffrement des données chiffrées reçues par le récepteur (32), en utilisant une clé de chiffrement du groupe de clés de chiffrement stocké dans le mémoire (2) ; et
un module de mise à jour de clé (43) configuré de manière à acquérir une nouvelle clé à une temporisation prescrite en vue de mettre à jour le groupe de clés de chiffrement dans la mémoire (2), dans lequel :
le module de mise à jour de clé (43) met en oeuvre une opération de réacquisition pour acquérir la nouvelle clé en vue de mettre à jour le groupe de clés de chiffrement dans la mémoire (2) indépendamment de la temporisation prescrite, lorsque le module de déchiffrement (42) échoue au déchiffrement et qu'une condition prescrite attribuée au noeud source de transmission n'est pas satisfaite ; et
le module de mise à jour de clé (43) ne met pas en oeuvre l'opération de réacquisition lorsque le module de déchiffrement (42) échoue au déchiffrement et que la condition prescrite est satisfaite.

2. Dispositif de communication (1) selon la revendication 1, dans lequel :
la mémoire (2) stocke l'expiration de la clé de chiffrement unique conjointement avec la clé de chiffrement unique ; et
le module de mise à jour de clé (43) met en oeuvre l'opération de réacquisition lorsqu'une heure en cours est postérieure à l'expiration.

3. Dispositif de communication (1) selon la revendication 2, dans lequel :
le module de mise à jour de clé (43) calcule l'expiration.

4. Dispositif de communication (1) selon l'une quelconque des revendications 1 à 3, comprenant en outre :
un émetteur (31) configuré, lorsque le module de déchiffrement (42) échoue au déchiffrement, de manière à transmettre une demande de confirmation chiffrée en utilisant la clé de chiffrement unique stockée dans la mémoire (2) au noeud source de transmission ; dans lequel :
le noeud source de transmission a acquis la nouvelle clé avant de recevoir la demande de confirmation ;
le récepteur (32) reçoit une réponse qui est, lorsque la clé de chiffrement unique stockée dans la mémoire (2) n'est pas la nouvelle clé dans le noeud source de transmission, chiffrée par le noeud source de transmission en utilisant une clé de chiffrement identique à la clé de chiffrement unique par laquelle la demande de confirmation est chiffrée ; et
y compris lorsque le module de déchiffrement (42) échoue au déchiffrement, le module de mise à jour de clé (43) ne met pas en oeuvre l'opération de réacquisition si la condition prescrite est satisfaite, la condition prescrite étant que la réponse à la demande de confirmation ne soit pas reçue.

5. Dispositif de communication (1) selon l'une quelconque des revendications 1 à 3, dans lequel :
la mémoire (2) stocke au moins la nouvelle clé et une clé de pré-mise à jour en tant que le groupe de clés de chiffrement ;
le module de déchiffrement (42) compte un nombre total d'occurrences d'échec du déchiffrement dans les deux cas, à savoir d'utilisation de la nouvelle clé et d'utilisation de la clé de pré-mise à jour ; et
y compris lorsque le module de déchiffrement (42) échoue au déchiffrement, le module de mise à jour de clé (43) ne met pas en oeuvre l'opération de réacquisition si la condition prescrite est satisfaite, la condition prescrite étant que le nombre total d'occurrences compté par le module de déchiffrement (42) soit inférieur à un seuil.

6. Dispositif de communication (1) selon la revendication 5, dans lequel :
le module de déchiffrement (42) réinitialise le nombre total d'occurrences d'échec du déchiffrement lorsque le déchiffrement est mis en oeuvre correctement, ou lorsqu'un temps prescrit s'est écoulé depuis un premier ou un dernier échec du déchiffrement.

7. Dispositif de communication (1) selon l'une quelconque des revendications 1 à 3, dans lequel :
y compris lorsque le module de déchiffrement (42) a échoué au déchiffrement, le module de mise à jour de clé (43) ne met pas en oeuvre l'opération de réacquisition si la condition prescrite est satisfaite, la condition prescrite étant que lorsque la clé de chiffrement unique a été acquise antérieurement, la clé de chiffrement unique ne soit pas modifiée, et qu'une période de temps définie ne se soit pas écoulée depuis que le module de déchiffrement (42) a échoué au déchiffrement.

8. Dispositif de communication (1) selon la revendication 7, dans lequel :
la mémoire (2) stocke le noeud source de transmission qui a transmis les données chiffrées dont le déchiffrement a échoué ; et
y compris lorsque le module de déchiffrement (42) a échoué au déchiffrement, le module de mise à jour de clé (43) ne met pas en oeuvre l'opération de réacquisition uniquement dans un cas où les données chiffrées en provenance du noeud source de transmission ne sont pas déchiffrées, si la condition prescrite est satisfaite, la condition prescrite étant que la clé de chiffrement unique ne soit pas modifiée lorsque la clé de chiffrement unique a été réacquise antérieurement et que la période de temps définie ne se soit pas écoulée depuis que le module de déchiffrement (42) a échoué au déchiffrement.

9. Dispositif de communication (1) selon l'une quelconque des revendications 1 à 8, dans lequel :
le récepteur (32) reçoit les données chiffrées qui sont chiffrées en utilisant la clé de chiffrement unique à une période définie.

10. Dispositif de communication (1) selon l'une quelconque des revendications 1 à 4, dans lequel :
la mémoire (2) stocke le groupe de clés de chiffrement incluant une seule clé de chiffrement, et lorsque le module de déchiffrement (42) échoue au déchiffrement, le module de mise à jour de clé (43) notifie, au noeud source de transmission, une défaillance du déchiffrement.

11. Dispositif de communication (1) selon l'une quelconque des revendications 1 à 9, dans lequel :
la mémoire (2) stocke au moins la nouvelle clé et une clé de pré-mise à jour en tant que le groupe de clés de chiffrement ; et
lorsque le module de déchiffrement (42) met en oeuvre le déchiffrement par la clé de pré-mise à jour, le module de mise à jour de clé (43) notifie, au noeud source de transmission, une demande de mise à jour du groupe de clés de chiffrement.

12. Système de communication (5), comprenant une pluralité des dispositifs de communication (1) selon l'une quelconque des revendications 1 à 11.

13. Système de communication (5) selon la revendication 12, comprenant en outre un dispositif de gestion de clés (6) configuré de manière à gérer le groupe de clés de chiffrement, dans lequel :
le module de mise à jour de clé (43) acquiert la nouvelle clé auprès du dispositif de gestion de clés (6).

14. Système de communication (5) selon la revendication 12 ou 13, dans lequel :
les dispositifs de la pluralité de dispositifs de communication (1) mettent en oeuvre une communication à sauts multiples.
